# EUROPEAN PATENT SPECIFICATION

(11) **EP 2 220 293 B1**
(45) Date of publication and mention of the grant of the patent: **16.10.2013**
(21) Application number: 08860889.8
(22) Date of filing: 10.12.2008
(51) Int. Cl.: D21G 1/02

(54) **THERMO ROLL**
THERMOROLLE
ROULEAU THERMIQUE

(30) Priority: 19.12.2007 FI 20075934
(43) Date of publication of application: 25.08.2010
(73) Proprietor: Metso Paper, Inc., 00130 Helsinki (FI)
(72) Inventor: HAKOLA, Jani, FI-04460 Nummenkylä (FI); VILJANMAA, Mika, FI-00760 Helsinki (FI); VANHALA, Tommi, 04430 Järvenpää (FI); GERDT, Armas, 01300 Vantaa (FI)
(74) Representative: TBK
(86) International application number: PCT/FI2008/050723
(87) International publication number: WO 2009/077647

(56) References cited:
- EP-B- 0 710 741
- WO-A-00/58554
- US-A- 4 519 757
- US-A- 4 955 268

## Description

### TECHNICAL FIELD

The present invention relates to a thermo roll used in fiber web machines, preferably paper, board and chemical pulp machines, for processing, such as heating, calendering, wet pressing and/or cooling, a web-like material.

The present invention relates to a heated and/or cooled roll, i.e. , a thermo roll, comprising a cylindrical inner shaft for carrying a load, a metallic outer layer surrounding the inner shaft, and flow channels for a heat-transfer agent, arranged in connection with an interface between the inner shaft and the outer layer.

### PRIOR ART

A thermo roll is known, e.g., from US-A-4 955 268.

The thermal power necessary for calendering paper and board is currently produced by heated rolls, thermo rolls. Calender running speeds have risen significantly over the past few years. In order to achieve the required calendering effect, the surface temperatures of thermo rolls must also be raised to 200°C - 250°C degrees or even higher. A high running speed combined with the high surface temperature of the thermo roll means that the thermal power exchange from the thermo roll must be very high, in new processes typically 200 kW/m or even higher.

It is known that the heat of the thermo roll is produced by conducting a fluid or gas serving as a heat-transfer agent inside the thermo roll and, particularly, in bores in its shell, from which the heat transfers to the shell and is conducted further to the surface of the roll.

Patent specification EP 0710741 B1 discloses a heated roll for calendering paper at a high temperature and under high pressure. In this thermo roll, a roll body consists of a wall of a first material, such as forged steel, cast iron, cast steel or ductile cast iron. This inner layer is equipped with a thin surrounding surface layer of a second material, which is hard and wear-resistant. In addition, this thermo roll has axial conduits for a heat-transfer agent, uniformly positioned and enclosed within the inner material.

The flow channels for the heat-transfer agent in the thermo roll described above are, in practice, round and have an equal diameter throughout their length, as restricted by the manufacturing technique of drilling, unless it is decided to use separate forms to slow the flow down, such as a larger diameter, or separate forms to accelerate the flow, such as a smaller diameter or, e.g., flow limiters in the flow channel. Thus, it is difficult to form separate characteristics slowing down or accelerating the flow in this kind of a flow channel. In addition, restricted by the manufacturing technique, drilled flow channels must be equal to or larger than a certain minimum diameter. Generally, it can be stated that the size and positioning of the flow channels close to the surface layer of the shell cannot be selected freely in a thermo roll as described above.

A chilled cast iron roll is a cast iron roll that is cast in a cooled metal mold. The method produces a hard, wear-resistant but fragile layer of white cast iron in the quickly cooled surface layer. A manufacturing technology problem with both chilled cast iron and steel rolls is that peripheral drilling is expensive and difficult. A lot of bores are necessary and must be positioned relatively distant from the surface of the thermo roll so that the temperature distribution becomes sufficiently even and that the positions and alignment errors of the bores are less significant. Drilling longitudinal holes in a roll shell is very difficult as the material distribution of a chilled cast iron roll generated by the casting prevents drilling close to the surface. It is usually necessary to drill two opposite holes from different directions. To achieve even heating and to accelerate the heating and cooling phases, it would be preferable to drill more flow channels in the shell. This has, up to now, not been possible due to the technically demanding nature and costs of this option. It can also be stated that the availability of large forged pieces is poor, and such pieces are expensive, especially when peripherally drilled.

In particular, the heating efficiency required of thermo rolls has increased. This has caused old chilled cast iron rolls to become inadequate due to increased thermal strains. Quenched and tempered steel rolls, representing a substitutive technology, have become impractical in terms of price and delivery period during the current high demand situation in the steel industry.

With chilled cast iron rolls, bores are positioned in a soft inner layer, i.e. , typically, in a "gray casting". A long heat-transfer distance between the bores and the surface necessarily results in a high oil temperature, as the thermal conductivity of the materials is relatively poor with both chilled cast iron and steel rolls.

The diameter of longitudinally drilled flow channels is usually constant throughout their length. However, from the perspective of even heat transfer, the location, cross-sectional area and peripheral wall length of the channels should change in accordance with the change in the temperature of the heating oil in the direction of motion of the flow, as proposed in patent specification FI 106054 B, for example. In prior art, this is achieved by changing the distance between the channel and the outer surface of the roll shell, by limiting the flow with a separate flow-limiting piece, whereby the cross-section area decreases and the flow rate increases, or by increasing the surface area of the wall by roughening, grooving or boring, etc. Another often used means for evening out the temperature differences in heating in the axial direction is to arrange the flow to run in different directions in adjacent flow channels.

Positioning flow channels close to the outer surface of the thermo roll is advantageous, as thereby the heat-transfer distance to the outer surface of the thermo roll becomes short. However, in known peripherally bored rolls, it has not been economically possible to position flow channels at relatively dense intervals in order to minimize "barring", i.e. , in the case of a roll, waviness in the roundness profile of the thermo roll caused by local differences in thermal expansion and bar-like variation in the temperature change on the outer surface of the thermo roll.

Barring is known to excite roll vibration and have a harmful effect on the characteristics of the paper being processed, which may be visible in differences in the gloss and thickness of the paper, among other things.

Another problem with known thermo rolls has been lack of sufficiently quick cooling of the thermo roll. For example, when replacing rolls, the thermo roll must be cooled down quickly in order to avoid unnecessary process delays.

Patent application FI20031232 discloses a thermo roll for processing a fiber web, the shell of which comprises at least two different material layers, wherein the thermo roll or its shell is equipped with heat-transfer means for heating and/or cooling the shell of the thermo roll by means of a heat-transfer agent. Flow channels for the heat-transfer agent are present in the shell of said thermo roll, enclosed within at least one of said material layers or in the border zone of said material layers.

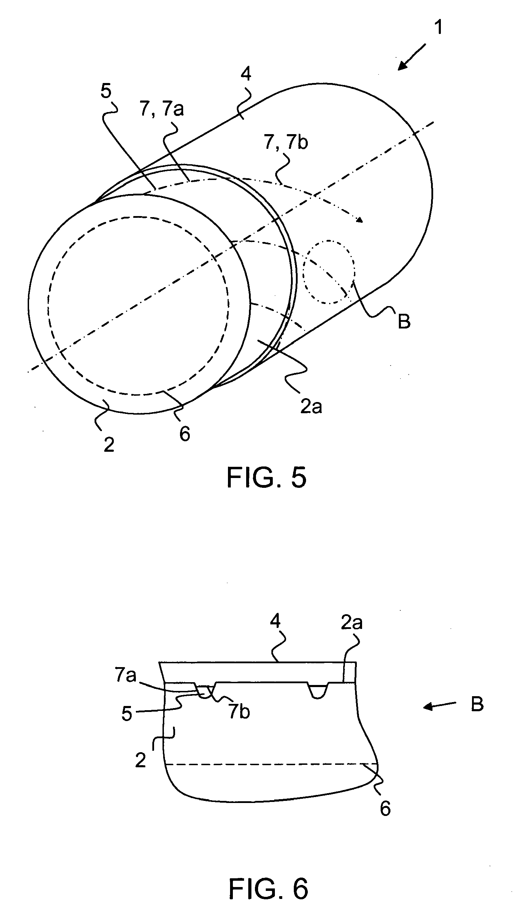

Patent specification FI 106054 B discloses a thermo roll, the shell of which, made of metal, ceramic or composite material, houses flow channels for a heat-transfer agent, formed in the material of the shell directly in connection with manufacturing. In one embodiment of this thermo roll (Figure 5), the flow channels are arranged in a layer of powder metal at an interface between an outer layer of the shell made of powder metal and an inner body layer. However, powder metallurgic manufacturing technology is expensive and there are few suppliers of large pieces.

A general object of the present invention is to eliminate or at least substantially alleviate the disadvantages and weaknesses described above. Another object is to provide a thermo roll capable of high heat transfer, with a flow channel system that can be readily manufactured mainly through machining, having low manufacturing costs and being made of readily available materials. A further object is to be able to more freely determine the size and positioning of the flow channels close to the surface of the thermo roll. To achieve even heat transfer, an object is to arrange a lot of flow channels with a small cross-section close to the surface of the thermo roll. A further object is to ensure the characteristics required of a shell of the thermo roll, such as surface or strength characteristics, and the load-carrying characteristics required of a body of the thermo roll.

These objects are achieved with the present invention, the characteristic features of which are defined in the appended claims.

### SUMMARY OF THE INVENTION

The main characteristic features of a thermo roll in accordance with the invention are disclosed in the characterizing part of claim 1.

The thermo roll in accordance with the invention is suitable for use in one or more of the following applications of a fiber web machine: a thermo roll of a multiroll calender, a thermo roll of a soft calender, a thermo roll of a long-nip calender, a thermo roll of a shoe calender, a thermo roll of a belt calender, a thermo roll of a metal belt calender, a drying cylinder or cooling cylinder of a dryer section, a thermo roll of a press unit of a fiber web machine and/or a thermo roll of a coating section of a fiber web machine.

A body of the thermo roll in accordance with the invention may be manufactured from a load-carrying, readily machined and easily available metal material. A shell layer of the thermo roll may also be manufactured from a readily machined and inexpensive metal material with easy availability. The shell layer may be optimized in accordance with the characteristics required of the surface layer, including such characteristics as smoothness, good wear resistance, and hardness. The machining operations required to manufacture an inner shaft and an outer layer of the thermo roll are simple. Due to the good overall thermal conductivity of the thermo roll in accordance with the invention, it is possible to achieve high thermal power using the thermo roll. The number of heat treatments required for the thermo roll in accordance with the invention is low, as no heat treatment of the inner shaft is necessary. As necessary, the outer layer may be subjected to heat treatments, such as surface hardening and/or stress-relief annealing and/or surface treatments and/or coatings to achieve the desired characteristics.

A surface layer may preferably be manufactured from rolled steel plate that has sufficient strength, can be welded and surface hardened. A shell tube may be manufactured from plate by bending and welding.

Flow channels for a heat-transfer agent of the thermo roll in accordance with the invention may be positioned close to the surface of the thermo roll, whereby the material remaining in between has a slight heat-insulating effect on the thermal power and the surface temperature of the thermo roll. The structure of the thermo roll in accordance with the invention enables easily providing the flow channels with, e.g., a flow cross-section with varying size or shape in order to optimize the flow channels in the longitudinal direction of the thermo roll, and the flow channels may be easily positioned below the surface of the thermo roll, e.g., at short distances from each other. Thus, a lot of flow channels may be positioned close to the surface of the thermo roll, having much smaller flow cross-sections than those of drilled peripheral holes. It is not necessary for the flow channels to be in parallel with the axis of the thermo roll; rather, they may also be arranged obliquely, for example, or in the form of a spiral, in order to advantageously avoid barring.

Advantageously, the outer layer of the thermo roll, carrying thermal strains, and the inner shaft, carrying mechanical loads, can be joined together by means of a shrink joint. The strength of the shrink joint can advantageously be improved by adding thin soldering material, such as silver, between the outer layer and the inner shaft at the joining stage. Said soldering material advantageously forms a solder joint through an increase in the temperature of the structure after forming the shrink joint. The reinforced shrink and friction joint has the advantage that a micro slip caused by loading is eliminated.

The thermo roll in accordance with the invention is intended for pressing and/or calendering a fiber web in a contact, i.e. , a nip, between the thermo roll and a mating member contacting it, or for drying or cooling the fiber web on the shell surface of the thermo roll.

It is also possible to make shaft extensions in the thermo roll simple, as a flow distribution channel system can be located in the inner shaft of the roll. The distribution channel system can be manufactured by drilling in radial directions before an outer shell is installed.

Various embodiments of the present invention will only be or have only been described in connection with one or some of the aspects of the invention. A person skilled in the art will appreciate that any embodiment of an aspect of the invention may be applied in the same aspect and other aspects alone or in combination with other embodiments.

In the following, the invention will be described by reference to the appended schematic figures, without, however, confining the invention to what is shown in the figures.

### SHORT DESCRIPTION OF THE FIGURES

Figure 1 shows a cross section of a thermo roll in accordance with an embodiment of the invention from the side of an axis of the thermo roll.
Figure 2 shows a perspective view of the thermo roll in accordance with Figure 1 without shaft ends.
Figure 3 shows a perspective view of a thermo roll in accordance with an embodiment of the invention, wherein an outer layer is fastened around an inner shaft with form closure by means of a thread.
Figure 4 shows a partial section along line A-A shown in Figure 3.
Figure 5 shows a perspective view of a thermo roll in accordance with another embodiment of the invention, wherein an outer layer is fastened around an inner shaft with form closure by means of a thread.
Figure 6 shows a partial section of a detail B shown in Figure 5.
Figure 7 shows a perspective view of a thermo roll in accordance with an embodiment of the invention, wherein an outer layer is fastened around an inner shaft with form closure by means of a tooth profile.
Figure 8 shows a computationally formed example of a deflection of a thermo roll in the form of a table.

### DESCRIPTION OF PREFERRED EMBODIMENTS

In the following description, like references refer to similar parts. It should be noted that the figures are not to scale in all cases and that they mainly serve the purpose of illustrating embodiments of the invention.

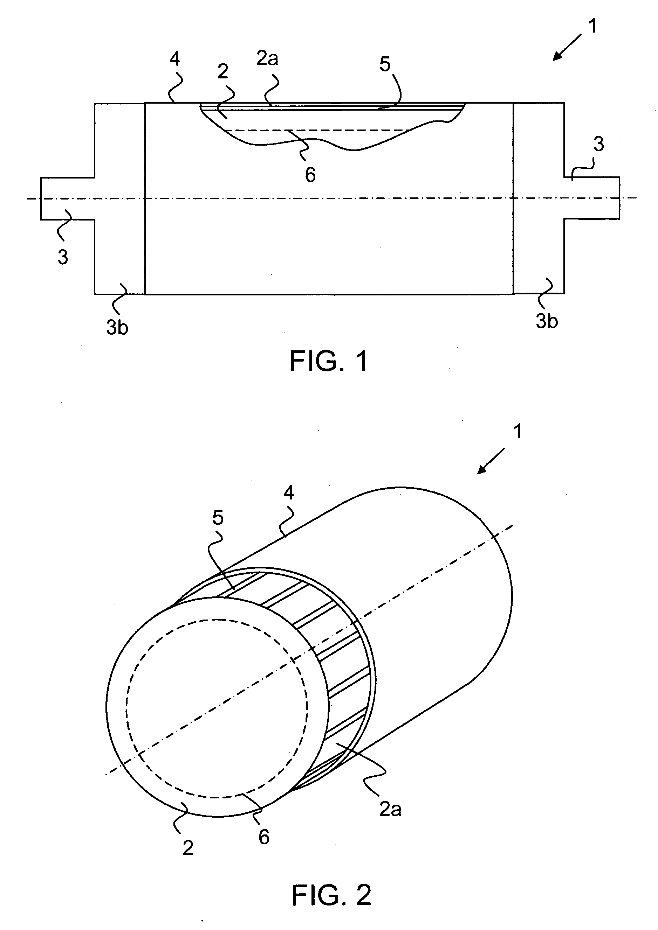

Figures 1 and 2 show a heated and/or cooled roll, i.e. , a thermo roll 1, in accordance with an embodiment of the invention, equipped with a thin outer layer 4 of, e.g., steel, and an inner shaft 2 within the outer layer, having flow grooves on its surface for forming flow channels 5 for a heat-transfer agent.

The thermo roll 1 comprises an inner shaft 2 and shaft ends 3 fastened to the ends of the inner shaft 2 for carrying a load. In the example shown in Figure 1, at least one of the shaft ends 3 fastened to the inner shaft 2 comprises at least one flow channel for conducting the heat-transfer agent in and/or out. The thermo roll 1 preferably comprises a steel outer layer 4 around the inner shaft 2 for transferring heat during operation from the heat-transfer agent to a fiber web/from the fiber web to the heat-transfer agent. The heat-transfer agent is preferably oil for use in high temperatures. The heat-transfer agent may also be water or steam. The thermo roll 1 comprises flow channels 5 for the heat-transfer agent, arranged in connection with an interface of the inner shaft 2 and the outer layer 4.

The flow channel 5 for the heat-transfer agent may consist of a flow groove on an outer surface 2a of the inner shaft 2 and a corresponding part on the inner surface of the outer layer 4; or a flow groove on the inner surface of the outer layer and a corresponding part on the outer layer of the inner shaft 2; or flow grooves on the surfaces of the inner shaft and the outer layer that are mutually aligned or shifted with regard to each other in the peripheral direction of the thermo roll, however, forming a flow channel. In Figure 1, the flow channels 5 are advantageously arranged on the outer surface 2a of the inner shaft 2 so that they form a preferably continuous flow channel system on the area of a shell against which a fiber web to be heated and/or cooled lies during operation of the thermo roll 1. This flow channel system may consist of flow channels running between the ends of the inner shaft 2. It is not necessary for the flow channels 5 to be in parallel with the axis of the thermo roll 1; rather, they may also be arranged obliquely or in the form of a spiral, for example, in order to advantageously avoid barring. The flow channels may also be arranged to meet with other flow channels obliquely cross-wise or to meet with other flow channels in a spiral form to provide suitable turbulence, i.e. , enhancement of the flow in the flow channel system for the heat-transfer agent.

The inner shaft 2 of the thermo roll in accordance with the invention may be manufactured from load-carrying, readily machined and inexpensive cast iron, such as ductile cast iron, preferably GRP500. The material structure of ductile cast iron has homogenous characteristics so that no deformations caused by heat that are harmful to the thermo roll are expected.

The outer layer 4 of the thermo roll may also be manufactured from readily machined and inexpensive steel, such as structural steel, which has high thermal conductivity. Preferably, the material of the outer layer 4 is hardening low-alloy steel. To provide the outer layer 4 with the desired characteristics with regard to wear resistance and hardness, the outer layer 4 is preferably hardened to achieve sufficient base hardness and stability for a hard coating. The hardness obtained with structural steel is about 350 to 400 HV, and the layer thickness of the hard material is thin. The outer layer 4 may be hardened using, e.g., a flame, laser or induction hardening method. Hardening provides the outer layer with a sufficiently hard base for a hard coating. A hardened outer layer of structural steel is preferably coated with a metallic hard coating or a carbide or ceramic coating, in which case the surface hardness of the outer layer is more than 500 HV. The coating may be provided using, e.g., a spray coating method or a laser coating method. Depending on the thickness of the coating and the evenness of the coating layer, the coating can preferably be machined when the thermo roll has been assembled in its entirety or when the outer layer has been assembled around the inner shaft or before assembly.

If a thicker hard layer is required of the outer layer 4, the outer layer 4 may alternatively be manufactured from martensitic, preferably stainless, steel, which enables achieving a substantial surface hardness without a separate coating layer so that the surface hardness of the outer layer is more than 550 HV.

The materials of the inner shaft 2 and outer layer 4 of the thermo roll are readily available, and the machining operations required for their manufacturing are simple. Due to the good overall thermal conductivity of the thermo roll in accordance with the invention, it is possible to achieve high thermal power using the thermo roll. The number of heat treatments required for the thermo roll in accordance with the invention is low. No heat treatment of the inner shaft 2 is necessary.

The flow channels 5 for the heat-transfer agent of the thermo roll in accordance with the invention may be positioned close to the surface of the thermo roll 1, whereby the material of the outer layer 4 remaining in between has a slight effect on the thermal power and the surface temperature of the thermo roll 1. The structure of the thermo roll 1 in accordance with the invention enables easily providing the flow channels 5 with, e.g., a flow cross-section having a desired, and as necessary varying, size, location and shape. The shape of the flow channel may be manufactured by selecting an appropriate shape for a machining tool, for example. A variable flow cross-section for the flow channel can be readily provided by machining the flow groove to have variable depth, whereby no displacement pieces are needed for changing the flow rate. The flow channels 5 described above may be optimized in the longitudinal direction of the thermo roll. The flow channels 5 may be easily positioned below the surface of the thermo roll, e.g., at short distances from each other. A lot of flow channels 5 may be arranged close to the surface of the thermo roll, having flow cross-sections that are advantageously smaller than what is economically possible using the manufacturing technology of drilling. The flow channels 5 may be formed on the surface of the inner shaft 2 by milling, for example, or in the case of, e.g., spiral flow channels, also by turning. Flow channels desired to be arranged on the inner surface of the outer layer can correspondingly be machined by milling, for example. The cross-sectional profile of the flow grooves 5 preferably avoids shapes that may cause the material to break, split, or crack, such as sharp interior angles and very small radii.

The thermo roll 1 relating to the invention does not include separate "peripheral bores" for the heat-transfer agent in the inner shaft 2 forming the body of the roll, or at least it is not necessary to use such axial flow channels enclosed within a material layer and generally extending from end to end of the shell of the thermo roll to transport the heat-transfer agent. The thermo roll 1 is mainly composed of two parts in the area constituting the shell, namely, the inner shaft 2, which may be tube-like or mainly solid, and the relatively thin-walled outer layer 4 surrounding the inner shaft 2. A potential inner surface of the inner shaft is indicated in the figures with a dotted line 6.

A preferably cylindrical and/or tube-like body of a thermo roll to be conditioned and/or a thermo roll with peripheral bores may be used as a basis for the inner shaft 2 of the thermo roll in accordance with the invention, whereby flow grooves constituting part of the cross-sectional profile of the flow channels 5 for the heat-transfer agent may be prepared in accordance with the invention on an outer surface 2a formed on this body.

The outer layer 4 of the thermo roll 1 may be fastened around the inner shaft 2 of the thermo roll 2 with form closure.

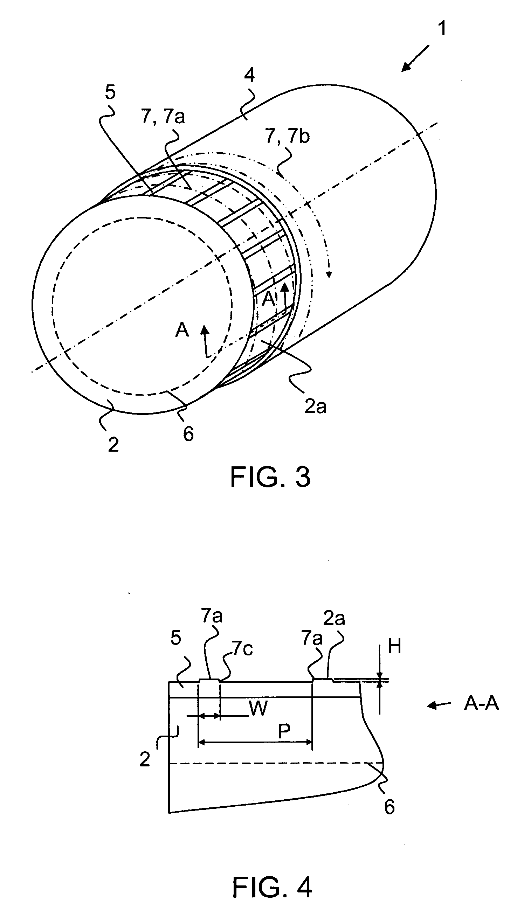

It is advantageous in terms of joining the inner shaft 2 and outer layer 4 of the thermo roll 1 with form closure and by crimping that the centricity of the inner shaft 2 and the outer layer 4 is good, with the centricity being of the order of about 50 micrometers, preferably about 10 micrometers. In this case, the inner shaft 2 and the outer layer 4 do not deflect due to heat either alone or as an assembled thermo roll 1. Centricity entails that the material of both the inner shaft and the outer layer is evenly distributed in view of thermal expansion, whereby a certain part or area on either piece does not thermally expand unevenly, which could cause the thermo roll to twist in different ways in different operating temperatures. It is also preferable to balance and machine the thermo roll while heated, preferably to an operating temperature, or at least close to the operating temperature. Both pieces must be machined before joining. Sufficient clearance must be provided for assembly in the case of a roll to be assembled using a thread as described in connection with Figure 3.

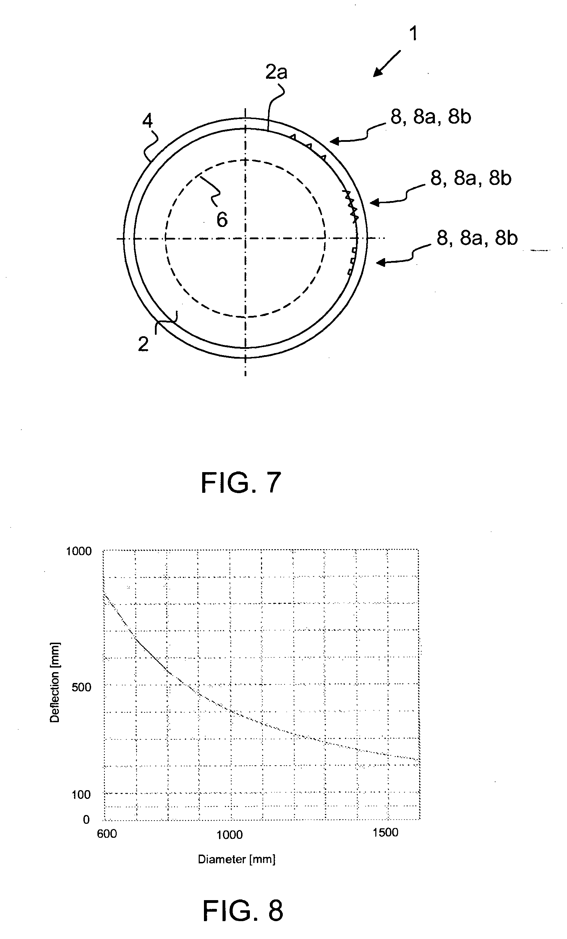

Figure 8 and the following description present a computationally formed example of a deflection of a thermo roll, when the length of a shell of the thermo roll is 10 meters and the temperature of the thermo roll is changed by 200°C. The horizontal axis of the table shown in Figure 8 represents the diameter of the roll, and the vertical axis represents the deflection of the roll. In the example, a shell of the thermo roll is composed of a tube with a wall thickness of 180 mm and having an inner hole. An outer layer of the shell is composed of a steel material layer having a thickness of 35. A material layer interior to the outer layer of the shell is made of ductile cast iron GRP. The eccentricity of the outer and inner material layers is selected to be 10 mm in the example.

The deflection changes linearly as a function of eccentricity (whereby, while eccentricity decreases from 10 mm to 1 mm, the deflection decreases to one-tenth of the original value), and, similarly, the deflection changes linearly as a function of the thickness of the outer layer of the shell (whereby, while the thickness of the outer layer of the shell decreases from 35 mm to 17.5 mm, the deflection decreases to one-half of the original value).

If it is desired that the deflection of the thermo roll is less than 50 micrometers with all practical diameters, which is indicated in Figure 8 with a dotted line, the joint surface must be concentric in relation to the outer and inner layers of the roll shell with a manufacturing precision by machining, for example, of +/- 0.25 mm. It is not possible to achieve values even close to this with chilled cast iron rolls.

Similarly, the joint surfaces must have good cylindricity in order to form an even joint, preferably about +/- 0.01 mm. When the joint surfaces are manufactured by turning, the cylindricity referred to above is not a problem.

Figure 3 shows a perspective view of a thermo roll 1 in accordance with an embodiment of the invention, wherein an outer layer 4 is fastened to an inner shaft 2 with form closure by means of a thread 7. The thermo roll 1 is simply assembled by turning the outer layer 4 around the inner shaft 4 by means of the thread 7. Subsequently, the thread 7 may be locked in manners described below. Figure 4 shows a partial section along line A-A shown in Figure 3. In addition to flow grooves 5, an outer thread 7a is prepared on an outer layer 2a of the inner shaft 2, and an inner thread 7b, co-operating with the outer thread 7a, is formed on an inner surface of the outer layer 4. As used herein, "an outer thread" refers to a thread formed on an outer surface of an object and, similarly, "an inner thread" refers to a thread formed on an inner surface of an object. During operation of the thermo roll 1, oil used as a heat-transfer agent flows on the surface of the inner shaft 2, whereby no power exchange from the inner shaft takes place, and the inner shaft remains at the constant temperature determined by the heat-transfer agent. Heat exchange takes place through the outer layer 4, whereby the average temperature of the outer layer is, e.g., about 30°C to 40°C lower than that of the inner shaft 2. Due to the temperature differences mentioned above, the outer layer 4 becomes "locked" in place in an operating situation of the thermo roll 1, as the inner shaft thermally expands more than the outer layer.

The outer thread 7a may be formed, e.g., by milling or turning, and the inner thread 7b may be formed, e.g., by milling, turning or boring. While it is not intended to confine the shape or profile of the thread 7, 7a, 7b in any way, it is advantageous to prepare the thread so as to meet the requirements of manufacturing, machining and assembly. There may be a number of parallel threads 7. The profile of the thread is preferably trapezoidal or conical, however, taking into account that it is preferable to avoid shapes that may cause the material to break, split or crack, such as sharp interior angles or very small radii at a base 7c of the thread profile, for example. The height H of the profile of the outer thread 7a and the inner thread 7b is preferably in the range 1 mm to 5 mm, more preferably in the range 2 mm to 4 mm. The width W of the profile of the outer thread 7a and the inner thread 7b is preferably of the order of about 10 mm. The pitch P of the outer thread 7a and the inner thread 7b is preferably of the order of about 100 mm.

The thread 7, 7a, 7b is preferably retentive, whereby the thread 7 may be locked by selecting the pitch 9 and/or profile of the outer thread 7a and/or the inner thread 7b appropriately. For example, a sufficiently small pitch P of the thread enables obtaining such retentiveness that forces in the axial direction applied to the outer layer during the operation of the thermo roll 1 cannot rotate the outer layer 4 in relation to the inner shaft 2. For example, a sufficiently large pitch P of the thread enables obtaining such retentiveness that forces in the peripheral direction applied to the outer layer during the operation of the thermo roll 1 cannot rotate the outer layer 4 in relation to the inner shaft 2. The retentiveness of the thread 7 can be utilized to keep the outer layer 4 in place around the inner shaft 2 during the acceleration and deceleration phases of the thermo roll 1, for example. The thread 7 may be made retentive preferably by means of a variable pitch and/or a variable thread profile. Both the outer thread 7a and the inner thread 7b may have a variable pitch and/or a variable profile; or only the inner thread 7a on the inner surface of the outer layer may have a variable pitch and/or a variable profile; or preferably only the outer thread 7a on the outer surface of the inner shaft may have a variable pitch and/or a variable profile. It is preferable to make the inner thread 7b as uniform as possible, e.g., having a constant pitch and a constant profile, since preparing an inner thread is more difficult than preparing an outer thread. A first retentive combination of an outer thread and an inner thread is as follows: the inner thread 7b is uniform, with a constant pitch and a constant profile; the outer thread 7a is uniform and equipped with the same constant pitch and constant profile as the inner thread. A second retentive combination of an outer thread and an inner thread is as follows: the inner thread 7b is uniform, with a constant pitch and a constant profile; the outer thread 7a is uniform and has a constant profile, but the pitch of the outer thread is smaller or larger than the pitch value of the inner thread at one end of the outer thread 7a and equipped with the same constant pitch over the remaining part of the thread. A third retentive combination of an outer thread and an inner thread is as follows: the inner thread 7b is uniform, with a constant pitch and a constant profile; the outer thread 7a is uniform and has a constant pitch, but the profile of the outer thread 7a has different dimensions compared with the constant profile of the inner thread at one end of the outer thread 7a and is equipped with the same constant profile over the remaining part of the thread.

Figures 5 and 6 show how, in accordance with an embodiment of the invention, an outer layer 4 of a thermo roll 1 is fastened to an inner shaft 2 with form closure by means of a thread 7, consisting of an inner thread 7b formed on the outer layer 4 and co-operating with an outer thread 7a formed on a flow channel 5 provided on the inner shaft 2. The thread 7, 7a, 7b is combined with the flow channel 5 so that the thread co-operates with at least one flow channel 5; in other words, at least one flow channel 5 is arranged to function as part of the thread 7, 7a, 7b. Naturally, the thread 7 may also consist of an outer thread 7a provided on the inner shaft 2, co-operating with an inner thread 7b formed on a flow channel 5 provided on the outer layer 4. Figure 6 shows a partial section of detail B shown in Figure 5. In this case, the inner thread 7b on the outer layer is not necessarily arranged on every flow channel 5; rather, while flow channels 5 are arranged in the form of a number of parallel threads, the inner thread 7b is arranged on an outer thread 7a arranged on at least one flow channel 5.

Figure 7 shows how, in accordance with an embodiment of the invention, an outer layer of a thermo roll 1 is fastened to an inner shaft 2 with form closure by means of a tooth profile 8, comprising an outer toothing 8a on the inner shaft 2 and an inner toothing 8b on the outer layer 4. The tooth profile 8 keeps the outer layer 4 in place preventing rotation around the inner shaft 2 at the acceleration and deceleration phases of the thermo roll 1, for example. The tooth profile 8, 8a, 8b may be combined with at least one flow channel 5, as described in connection with Figures 5 and 6. Thus, at least one flow channel 5 is arranged to function as part of the tooth profile 8, 8a, 8b.

In accordance with an embodiment of the invention, an outer layer 4 of a thermo roll 1 is fastened and locked in a manner preventing rotation around an inner shaft 2 with wedge locking (not shown). In this case, at least one wedge groove is arranged on a surface 2a of the inner shaft 2 and, correspondingly, wedge grooves are arranged on the inner surface of the outer layer, in order to arrange at least one wedge in a lockable manner on opposite wedge grooves. Preferably, the wedge grooves are evenly spaced and uniformly distributed in the peripheral direction and the wedge(s) are arranged so that, when assembled, the thermo roll 1 is in balance, or at least can be easily balanced for operation. The wedge may comprise an expansive part to be tightened or locked in place, or two slanting wedges may be tightened from opposite directions to be locked in place.

In accordance with an embodiment of the invention, an outer layer 4 of a thermo roll 1 is locked, i.e. , fastened in a manner preventing rotation, in relation to an inner shaft 2 with a screw joint (not shown). The screw joint may provided between the outer layer 4 and the inner shaft 2, or the screw joint may be provided between the outer layer 4 and a flange part 3b of a shaft end 3, the inner shaft 2 being fastened to the flange parts at its ends. Preferably, the screw joint is provided in addition to the fastening methods described above.

In accordance with an embodiment of the invention, an outer layer 4 of a thermo roll 1 is fastened in a manner that prevents rotation at least at one end thereof to flange parts 3b of shaft ends 3 of the thermo roll 1, the inner shaft 2 being fastened to the flange parts at its ends. The outer layer may be fastened to the flange part 3b using wedge locking or a screw joint, for example.

In accordance with an embodiment of the invention, an outer layer 4 of a thermo roll 1 is fastened and locked in a manner that prevents rotation around an inner shaft 2 by crimping. The thermo roll 1 to be crimped may also be illustrated by Figures 1 and 2 and the respective description. In this case, for a successful installation of the outer layer 4, a sufficient installation clearance must be provided around the inner shaft 2. A sufficient clearance may be provided by heating the outer layer to about 500 °C, while the inner diameter of the outer layer 4 is about 900 mm, when the temperature of the inner shaft is about that of the production premises. The increase in temperature mentioned above results in a radial clearance of about 2. 2 mm due to thermal expansion, which can be considered sufficient. When the outer layer cools down, it shrinks forming a joint by crimping, i.e. , by means of a shrink joint/shrink fit. The fastening methods described above may be used in addition to the crimp joint.

In accordance with an embodiment of the invention, the wall thickness of an outer layer 4 of a thermo roll 1 is about 5 to 60 mm, preferably 15 to 30 mm.

When the wall thickness of the outer layer 4 of the thermo roll 1 is about 20 mm, it is possible to advantageously use water as the heat-transfer agent in certain processes, which results in savings.

The thermo roll in accordance with the invention is preferably at least one of the following: a thermo roll of a multiroll calender, a thermo roll of a soft calender, a thermo roll of a long-nip calender, a thermo roll of a shoe calender, a thermo roll of a belt calender, a thermo roll of a metal belt calender, a drying cylinder or cooling cylinder of a dryer section, a thermo roll of a press unit of a fiber web machine and/or a thermo roll of a coating section of a fiber web machine.

The thermo roll 1 enables achieving surface temperatures of almost 300 degrees. The thermo roll 1 may be implemented by modernizing old thermo rolls, particularly their bodies, in accordance with the invention. It is also possible to perform roll maintenance by replacing a worn outer layer by a new outer layer 4, whereby the inner shaft 2 of the thermo roll 1 may be reused as such, or flow channels 5 with different profiles may be formed for the heat-transfer agent on the surface 2a of the inner shaft 2.

An application of the thermo roll 1 disclosed below, comprising fastening of an outer layer 4 to an inner shaft 2 by soldering in addition to a shrink joint, can be implemented in combination with some of the embodiments of the thermo roll presented above, and the application of the thermo roll presented below can also be implemented, e.g., without the flow channels 5 formed at the interface of the inner shaft 2 and the outer layer 4. Thus, the flow channels of such a thermo roll may also be peripheral bores within the material of the inner shaft, for example, or flow channels enclosed within the material of the inner shaft.

In accordance with a preferred embodiment, an inner shaft 2, preferably made of ductile cast iron, carries the mechanical loads applied to the thermo roll 1, while not being subject to any significant thermal strains. In contrast, a steel shell serving as an outer layer 4 carries the greater part of the thermal strains, and can be provided with a smooth and wear-resistant surface. The steel shell forming the outer layer 4 of the thermo roll 1 is intended to be assembled with a shrink joint around the inner shaft 2.

The strength of the shrink joint between the outer layer 4 and the inner shaft 2 is preferably improved by arranging thin soldering material that melts at a temperature higher than that of the thermo roll during operation, e.g., a wire or a film, preferably silver wire, preferably on a joint surface of the inner shaft 2 (or on a joint surface of the outer layer 4, or on both said surfaces) at the assembly stage, i.e., at the joining stage. After the shrink joint is completed, the temperature of the thermo roll is raised in order to melt the soldering material, whereby a solder joint is formed of soldering material in connection with the joint surfaces in the joint area. The strength of the solder joint is sufficient as, due to the large surface area of the solder joint, the strength requirements for the joint are low. The solder joint can be achieved simply and quickly.

An advantage of the thermo roll mentioned above, where the shrink joint of the outer layer 4 is enhanced with a solder joint, compared with a thermo roll only equipped with a friction joint for the outer layer, is that a micro slip caused by loading is eliminated. The micro slip may cause wear of the surfaces and higher levels of detrimental fretting fatigue. Fretting, or friction, fatigue is a phenomenon where a fracture nucleates on the contacting surfaces of two pieces pressed together. For the nucleation of a fracture, it is usually required that an oscillating slip at a low amplitude occurs between the surfaces. In the case of a shrink joint reinforced by soldering between the inner shaft and the shell layer, an oscillating slip between the layers is eliminated.

The invention has been described above by way of example with reference to the figures of the appended drawings. However, the invention is not confined to what is shown in the figures; rather, various embodiments of the invention may vary within the scope of the inventive idea defined in the appended claims.

## Claims

1. A heated and/or cooled roll, i.e. , a thermo roll (1), of a fiber web machine, comprising a cylindrical inner shaft (2) for carrying a load, a metallic outer layer (4) surrounding the inner shaft and flow channels (5) for a heat-transfer agent, arranged in connection with an interface of the inner shaft and the outer layer, and the thermo roll (1) being manufactured by assembling the inner shaft (2) and the outer layer (4), and the flow channels (5) of the thermo roll consisting of flow grooves (5) formed before the assembly of the inner shaft and the outer layer on an outer surface (2a) of the inner shaft (2) and/or an inner surface of the outer layer (4), **characterized in that** the outer layer (4) is fastened to the inner shaft (2) with form closure.

2. A thermo roll as claimed in claim 1, **characterized in that** the outer layer (4) is fastened to the inner shaft (2) by means of a thread, comprising an outer thread on the outer surface (2a) of the inner shaft (2) and an inner thread (7b) on the inner surface of the outer layer, preferably at least one flow channel (5) is arranged to function as part of the thread (7, 7a, 7b).

3. A thermo roll as claimed in claim 1, **characterized in that** the outer layer (4) is fastened to the inner shaft (2) by means of a tooth profile (8), comprising an outer toothing (8a) on the inner shaft (2) and an inner toothing (8b) on the outer layer.

4. A thermo roll as claimed in claim 3, **characterized in that** at least one flow channel (5) is arranged to function as part of the tooth profile (8, 8a, 7b).

5. A thermo roll as claimed in any one of claims 1 to 4, **characterized in that** the thermo roll comprises shaft ends (3) to which the inner shaft (2) is fastened at its ends, the shaft ends comprising flange parts (3b), to which the outer layer (4) is fastened in a manner preventing rotation, preferably the outer layer (4) is fastened with a screw joint in a manner preventing rotation in relation to the inner shaft (2).

6. A thermo roll as claimed in any one of claims 1 to 5, **characterized in that** the outer layer (4) is fastened around the inner shaft (2) with a shrink fit/shrink joint, preferably the inner shaft is of cast iron.

7. A thermo roll as claimed in any one of claims 1 to 6, **characterized in that** the outer layer is of steel and optionally comprises a coating around it, preferably the thermo roll is arranged to have a surface hardness of at least 500 HV.

8. A thermo roll as claimed in any one of claims 1 to 7, **characterized in that** the material of the outer layer (4) is structural steel.

9. A thermo roll as claimed in any one of claims 1 to 8, **characterized in that** the material of the outer layer (4) is low-alloy steel with high heat conductivity.

10. A thermo roll as claimed in claim 8 or 9, **characterized in that** the outer layer (4) is hardened using, e.g., a flame, laser or induction hardening method.

11. A thermo roll as claimed in claim 10, **characterized in that** the outer layer (4) is hardened and hard coated to a hardness of more than 500 HV using, e.g., a spray coating or a laser coating method.

12. A thermo roll as claimed in any one of claims 1 to 6, **characterized in that** the material of the outer layer (4) is martensitic stainless steel, whereby the surface hardness of the outer layer is more than 550 HV.

13. A thermo roll as claimed in any one of claims 1 to 12, **characterized in that** the material of the inner shaft (2) is ductile cast iron, preferably ductile cast iron GRP500, preferably the wall thickness of the outer layer (4) is about 5 mm to 60 mm, preferably 15 mm to 30 mm, more preferably the inner shaft (2) is tube-like.

14. A thermo roll as claimed in any one of claims 1 to 13, **characterized in that** the outer layer (4) is fastened around the inner shaft (2) by means of a shrink joint and a solder joint so that soldering material is arranged between the outer layer (4) and the inner shaft (2), perferably the soldering material comprises a metal material that melts at a temperature higher than that of the thermo roll (1) during operation, and which is in the form of a thin wire or film prior to soldering.

15. A thermo roll as claimed in claim 14, **characterized in that** the soldering material comprises silver or a silver alloy.

## Patentansprüche

1. Erwärmte und/oder gekühlte Walze, d. h. eine Thermowalze (1), einer Faserbahnmaschine mit einer zylindrischen Innenwelle (2) zum Tragen einer Last, einer metallischen Außenschicht (4), die die Innenwelle umgibt, und Strömungskanälen (5) für ein Wärmeübertragungsmittel, die in Verbindung mit einer Schnittstelle der Innenwelle und der Außenschicht angeordnet sind, und wobei die Thermowalze (1) durch ein Zusammensetzen der Innenwelle (2) und der Außenschicht (4) hergestellt ist und wobei die Strömungskanäle (5) der Thermowalze aus Strömungsnuten (5) bestehen, die vor dem Zusammenbau der Innenwelle und der Außenschicht auf einer Außenfläche (2a) der Innenwelle (2) und/oder einer Innenfläche der Außenschicht (4) ausgebildet sind,
**dadurch gekennzeichnet, dass** die Außenschicht (4) mit einem Formschluss an der Innenwelle (2) befestigt ist.

2. Thermowalze nach Anspruch 1, **dadurch gekennzeichnet, dass** die Außenschicht (4) mittels eines Gewindes an der Innenwelle (2) befestigt ist, das ein Außengewinde an der Außenfläche (2a) der Innenwelle (2) und ein Innengewinde (7b) an der Innenfläche der Außenschicht aufweist, wobei vorzugsweise zumindest ein Strömungskanal (5) angeordnet ist, um als ein Teil des Gewindes (7, 7a, 7b) zu funktionieren.

3. Thermowalze nach Anspruch 1, **dadurch gekennzeichnet, dass** die Außenschicht (4) an der Innenwelle (2) mittels eines Zahnprofils (8) befestigt ist, das eine Außenverzahnung (8a) an der Innenwelle (2) und eine Innenverzahnung (8b) an der Außenschicht aufweist.

4. Thermowalze nach Anspruch 3, **dadurch gekennzeichnet, dass** zumindest ein Strömungskanal (5) angeordnet ist, um als ein Teil des Zahnprofils (8, 8a, 7b) zu funktionieren.

5. Thermowalze nach einem der Ansprüche 1 bis 4, **dadurch gekennzeichnet, dass** die Thermowalze Wellenenden (3) aufweist, an welche die Innenwelle (2) an deren Enden befestigt ist, wobei die Wellenenden Flanschteile (3b) aufweisen, an die die Außenschicht (4) in einer Art und Weise befestigt ist, welche eine Rotation verhindert, wobei vorzugsweise die Außenschicht (4) mit einer Schraubverbindung in einer Art und Weise befestigt ist, die eine Rotation im Verhältnis zu der Innenwelle (2) verhindert.

6. Thermowalze nach einem der Ansprüche 1 bis 5, **dadurch gekennzeichnet, dass** die Außenschicht (4) um die Innenwelle (2) mit einer Schrumpfpassung/Schrumpfverbindung befestigt ist, wobei die Innenwelle vorzugsweise aus Gusseisen ist.

7. Thermowalze nach einem der Ansprüche 1 bis 6, **dadurch gekennzeichnet, dass** die Außenschicht aus Stahl ist und optional eine Beschichtung um diese herum aufweist, wobei die Thermowalze vorzugsweise angeordnet ist, um eine Oberflächenhärte von zumindest 500 HV zu haben.

8. Thermowalze nach einem der Ansprüche 1 bis 7, **dadurch gekennzeichnet, dass** das Material der Außenschicht (4) Baustahl ist.

9. Thermowalze nach einem der Ansprüche 1 bis 8, **dadurch gekennzeichnet, dass** das Material der Außenschicht (4) ein niedrig legierter Stahl mit einer hohen Wärmeleitfähigkeit ist.

10. Thermowalze nach Anspruch 8 oder 9, **dadurch gekennzeichnet, dass** die Außenschicht (4) unter Verwendung von zum Beispiel einem Flamm-, Laser- oder Induktionshärtungsverfahren gehärtet ist.

11. Thermowalze nach Anspruch 10, **dadurch gekennzeichnet, dass** die Außenschicht (4) gehärtet und hartbeschichtet ist bis zu einer Härte von mehr als 500 HV unter Verwendung von zum Beispiel einem Sprühbeschichtungs- oder Laserbeschichtungsverfahren.

12. Thermowalze nach einem der Ansprüche 1 bis 6, **dadurch gekennzeichnet, dass** das Material der Außenschicht (4) martensitischer rostfreier Stahl ist, wobei die Oberflächenhärte der Außenschicht mehr als 550 HV ist.

13. Thermowalze nach einem der Ansprüche 1 bis 12, **dadurch gekennzeichnet, dass** das Material der Innenwelle (2) duktiles Gusseisen ist, vorzugsweise duktiles Gusseisen GRP500, wobei vorzugsweise die Wanddicke der Außenschicht (4) ungefähr 5 mm bis 60 mm, vorzugsweise 15 mm bis 30 mm ist, wobei die Innenwelle (2) vorzugsweise röhrenartig ist.

14. Thermowalze nach einem der Ansprüche 1 bis 13, **dadurch gekennzeichnet, dass** die Außenschicht (4) um die Innenwelle (2) mittels einer Schrumpfverbindung und einer Lötverbindung befestigt ist, so dass Lötmaterial zwischen der Außenschicht (4) und der Innenwelle (2) angeordnet ist, wobei das Lötmaterial vorzugsweise ein Metallmaterial aufweist, das bei einer Temperatur höher als jene der Thermowalze (2) während eines Betriebs schmilzt und das vor einem Löten in der Form eines dünnen Drahts oder Films ist.

15. Thermowalze nach Anspruch 14, **dadurch gekennzeichnet, dass** das Lötmaterial Silber oder eine Silberlegierung aufweist.

## Revendications

1. Rouleau chauffé et/ou refroidi, à savoir, un rouleau thermique (1), d'une machine à bande fibreuse, comprenant un arbre interne cylindrique (2) pour porter une charge, une couche externe métallique (4) entourant l'arbre interne et des canaux d'écoulement (5) pour un agent de transfert thermique, disposés en connexion avec une interface de l'arbre interne et de la couche externe, et le rouleau thermique (1) étant fabriqué par assemblage de l'arbre interne (2) et de la couche externe (4), et les canaux d'écoulement (5) du rouleau thermique sont constitués de rainures d'écoulement (5) formées avant l'assemblage de l'arbre interne et de la couche externe sur une surface externe (2a) de l'arbre interne (2) et/ou une surface interne de la couche externe (4),
**caractérisé en ce que** la couche externe (4) est fixée à l'arbre interne (2) avec liaison de forme.

2. Rouleau thermique tel que revendiqué dans la revendication 1, **caractérisé en ce que** la couche externe (4) est fixée à l'arbre interne (2) au moyen d'un filetage, comprenant un filetage externe sur la surface externe (2a) de l'arbre interne (2) et un filetage interne (7b) sur la surface interne de la couche externe, de préférence au moins un canal d'écoulement (5) est agencé pour fonctionner en tant que partie du filetage (7, 7a, 7b).

3. Rouleau thermique tel que revendiqué dans la revendication 1, **caractérisé en ce que** la couche externe (4) est fixée à l'arbre interne (2) au moyen d'un profil denté (8), comprenant une denture externe (8a) sur l'arbre interne (2) et une denture interne (8b) sur la couche externe.

4. Rouleau thermique tel que revendiqué dans la revendication 3, **caractérisé en ce qu'**au moins un canal d'écoulement (5) est agencé pour fonctionner en tant que partie du profil denté (8, 8a, 7b).

5. Rouleau thermique tel que revendiqué dans l'une quelconque des revendications 1 à 4, **caractérisé en ce que** le rouleau thermique comprend des extrémités d'arbre (3) auxquelles l'arbre interne (2) est fixée au niveau de ses extrémités, les extrémités d'arbre comprenant des parties de rebord (3b), auxquelles la couche externe (4) est fixée d'une manière empêchant la rotation, de préférence la couche externe (4) est fixée avec un joint à vis d'une manière empêchant la rotation par rapport à l'arbre interne (2).

6. Rouleau thermique tel que revendiqué dans l'une quelconque des revendications 1 à 5, **caractérisé en ce que** la couche externe (4) est fixée autour de l'arbre interne (2) avec un ajustement par contraction/ joint par contraction, de préférence l'arbre interne est en fonte.

7. Rouleau thermique tel que revendiqué dans l'une quelconque des revendications 1 à 6, **caractérisé en ce que** la couche externe est en acier et comprend éventuellement un revêtement autour de celle-ci, de préférence le rouleau thermique est agencé de manière à avoir une dureté de surface d'au moins 500 HV.

8. Rouleau thermique tel que revendiqué dans l'une quelconque des revendications 1 à 7, **caractérisé en ce que** le matériau de la couche externe (4) est de l'acier de construction.

9. Rouleau thermique tel que revendiqué dans l'une quelconque des revendications 1 à 8, **caractérisé en ce que** le matériau de la couche externe (4) est de l'acier faiblement allié ayant une conductivité thermique élevée.

10. Rouleau thermique tel que revendiqué dans la revendication 8 ou 9, **caractérisé en ce que** la couche externe (4) est durcie en utilisant, par exemple, un procédé de durcissement à la flamme, par trempe au laser ou par induction.

11. Rouleau thermique tel que revendiqué dans la revendication 10, **caractérisé en ce que** la couche externe (4) est durcie et a subi un revêtement dur à une dureté supérieure à 500 HV en utilisant, par exemple, un procédé de revêtement par pulvérisation ou par laser.

12. Rouleau thermique tel que revendiqué dans l'une quelconque des revendications 1 à 6, **caractérisé en ce que** le matériau de la couche externe (4) est de l'acier inoxydable martensitique, moyennant quoi la dureté de surface de la couche externe est supérieure à 550 HV.

13. Rouleau thermique tel que revendiqué dans l'une quelconque des revendications 1 à 12, **caractérisé en ce que** le matériau de l'arbre interne (2) est de la fonte ductile, de préférence de la fonte ductile GRP500, de préférence l'épaisseur de paroi de la couche externe (4) est d'environ 5 mm à 60 mm, de préférence de 15 mm à 30 mm, plus préférablement l'arbre interne (2) est en forme de tube.

14. Rouleau thermique tel que revendiqué dans l'une quelconque des revendications 1 à 13, **caractérisé en ce que** la couche externe (4) est fixée autour de l'arbre interne (2) au moyen d'un joint par contraction et d'un joint à brasure tendre de sorte que le matériau de brasage soit disposé entre la couche externe (4) et l'arbre interne (2), de préférence le matériau de brasage comprend un matériau métallique qui fond à une température supérieure à celle du rouleau thermique (1) pendant le fonctionnement, et qui est sous la forme d'un fil ou d'un film mince avant le brasage.

15. Rouleau thermique tel que revendiqué dans la revendication 14, **caractérisé en ce que** le matériau de brasage comprend de l'argent ou un alliage d'argent.
